# EUROPEAN PATENT SPECIFICATION

(11) **EP 1 875 546 B1**
(45) Date of publication and mention of the grant of the patent: **24.12.2008**
(21) Application number: 06736262.4
(22) Date of filing: 28.02.2006
(51) Int. Cl.: H01M 8/04

(54) **FUEL CELL SYSTEMS AND RELATED METHOD**
BRENNSTOFFZELLENSYSTEME UND DIESBEZÜGLICHES VERFAHREN
DISPOSITIFS DE PILE A COMBUSTIBLE ET PROCEDE ASSOCIE

(30) Priority: 10.03.2005 US 76800
(43) Date of publication of application: 09.01.2008
(73) Proprietor: The Gillette Company, Boston, Massachusetts 02199 (US)
(72) Inventor: SPECHT, Steven, J., Brookfield, Connecticut 06804 (US)
(74) Representative: Rasser, Jacobus Cornelis
(86) International application number: PCT/US2006/006903
(87) International publication number: WO 2006/098869

(56) References cited:
- EP-A- 1 306 917
- WO-A-20/05004268
- US-A1- 2005 014 041

## Description

A fuel cell is a device capable of providing electrical energy from an electrochemical reaction, typically between two or more reactants. Generally, a fuel cell includes two electrodes, called an anode and a cathode, and a solid electrolyte disposed between the electrodes. The anode contains an anode catalyst, and the cathode contains a cathode catalyst. The electrolyte, such as an electrolyte membrane, is typically ionically conducting but electronically non-conducting. The electrodes and solid electrolyte can be disposed between two gas diffusion layers (GDLs).

During operation of the fuel cell, the reactants are introduced to the appropriate electrodes. At the anode, the reactant(s) (the anode reactant(s)) interacts with the anode catalyst and forms reaction intermediates, such as ions and electrons. The ionic reaction intermediates can flow from the anode, through the electrolyte, and to the cathode. The electrons, however, flow from the anode to the cathode through an external load electrically connecting the anode and the cathode. As electrons flow through the external load, electrical energy is provided. At the cathode, the cathode catalyst interacts with the other reactant(s) (the cathode reactant(s)), the intermediates formed at the anode, and the electrons to complete the fuel cell reaction.

For example, in one type of fuel cell, sometimes called a direct methanol fuel cell (DMFC), the anode reactants include methanol and water, and the cathode reactant includes oxygen (e.g., from air). At the anode, methanol is oxidized; and at the cathode, oxygen is reduced:

CH₃OH + H₂O → CO₂+ 6H⁺ + 6e⁻ (1)

3/2O₂ + 6H⁺+ 6e⁻ → 3H₂O (2)

CH₃OH+3/2O₂ → CO₂+2H₂O (3)

As shown in Equation 1, oxidation of methanol produces carbon dioxide, protons, and electrons. The protons flow from the anode, through the electrolyte, and to the cathode. The electrons flow from the anode to the cathode through an external load, thereby providing electrical energy. At the cathode, the protons and the electrons react with oxygen to form water (Equation 2). Equation 3 shows the overall fuel cell reaction.

International patent application WO2005/004268 describes a fuel container for supplying fuel to a fuel cell. The fuel container is constituted by a container main body, an inner container for housing fuel, and a valve mechanism for enabling and/or disabling supply of fuel. Compressed gas is sealed between the container main body and the inner container for ejecting the fuel. The fuel container may also include an injection valve to enable reinjection of fuel into the fuel container.

The invention relates to fuel cell systems.

In one aspect of the invention, a fuel cartridge includes a housing having an outlet, a fuel container in the housing, a flow control mechanism in fluid communication with the fuel container and the outlet, and a power source in the housing. The flow control mechanism is operable to control fuel flow through the outlet.

In a further aspect of the invention, a fuel cell system includes a fuel cell assembly including a fuel cell and such a fuel cartridge.

In an additional aspect of the invention, a method of initiating startup and maintaining operation of a fuel cell system includes connecting a fuel cartridge to a fuel cell assembly so as to form a fuel cell system, detecting a level of available energy in the fuel cell assembly, and, upon detecting that the level of available energy is less than a first predetermined energy level, providing the fuel cell assembly with energy from a power source in the fuel cartridge.

Embodiments may include one or more of the following features.

In some embodiments, the fuel cartridge is coupled to a fuel cell assembly.

In certain embodiments, the flow control mechanism is coupled to an actuator.

In some embodiments, the flow control mechanism is mechanically coupled to the actuator.

In certain embodiments, the mechanical coupling includes a splined shaft, a keyed shaft, a jaw clutch, a friction clutch, a gear, and/or a rod.

In some embodiments, the actuator is positioned within a fuel cell assembly, and the fuel cartridge is coupled to the fuel cell assembly.

In certain embodiments, the actuator is positioned within the fuel cartridge.

In some embodiments, the actuator includes a piezoelectric element.

In certain embodiments, the flow control mechanism includes a pump.

In some embodiments, the pump includes a peristaltic pump, a vane pump, a screw pump, a diaphragm pump, a gear pump, a bellows pump, and/or a piston pump.

In certain embodiments, the flow control mechanism includes a valve.

In some embodiments, the valve includes a diaphragm valve, a needle valve, a rotary valve, a plug valve, a flapper valve, a poppett valve, a disk valve, a gate valve, a duckbill valve, an umbrella valve, and/or a slit valve.

In certain embodiments, the power source includes a primary battery.

In some embodiments, the primary battery produces at most about 3W.

In some embodiments, the primary batter produces at least about 50mW.

In certain embodiments, the fuel includes methanol, ethanol, hydrocarbons, formic acid, ammonia, and/or hydrazine.

In some embodiments, the fuel is at a pressure of about 0.1 atmosphere to about 10 atmospheres.

In certain embodiments, the fuel container includes a fuel bladder.

In some embodiments, the fuel cell assembly further includes a secondary battery.

In certain embodiments, the fuel cell system further includes a control device connected to the secondary battery and the power source. The control device is adapted to determine whether a power level of the secondary battery is sufficient to operate the actuator.

In some embodiments, the control device is adapted to electrically connect the power source to the actuator upon determining that the power level is insufficient to operate the actuator.

In certain embodiments, the flow control mechanism is coupled to the actuator.

In some embodiments, the fuel cell system further includes an actuator in communication with the power source.

In certain embodiments, the actuator is positioned in the fuel cell assembly.

In some embodiments, the actuator is positioned within the fuel cartridge.

In certain embodiments, the fuel cartridge includes a pressure source configured to apply pressure to the fuel bladder.

In some embodiments, the pressure source includes a spring-loaded mechanism.

In certain embodiments, the pressure source comprises a pressurized fluid.

In some embodiments, a housing of the actuator is integrally formed with the housing of the fuel cartridge.

In certain embodiments, the first predetermined energy level is a minimum energy level required to initiate operation of the fuel cell.

In some embodiments, the first predetermined energy level is a minimum energy level required to operate an actuator of the fuel cell for a predetermined amount of time.

In certain embodiments, the method further includes ceasing the provision of energy from the power source to the fuel cell upon detecting that the level of available energy is greater than a second predetermined energy level.

In some embodiments, the second predetermined energy level is a minimum energy level required to maintain operation of the fuel cell.

In certain embodiments, connecting the fuel source to the fuel cell includes connecting a fuel cartridge to the fuel cell. The fuel cartridge includes the fuel source and the power source.

In some embodiments, the method further includes transferring energy from the fuel cell to an electronic device.

Other features and advantages are in the description, drawings, and claims.

FIG. 1 is a schematic illustration of an embodiment of a fuel cell system including a fuel cartridge coupled to a fuel cell assembly.

FIG. 2 is a schematic illustration of an embodiment of a fuel cell system including a fuel cartridge having an actuator positioned therein.

FIG 3 is a schematic illustration of an embodiment of a fuel cell system including a fuel cell assembly having a flow control mechanism positioned therein.

FIG. 4 is a schematic illustration of a fuel cell system including a fuel cartridge having a pressurized fuel source and a valve.

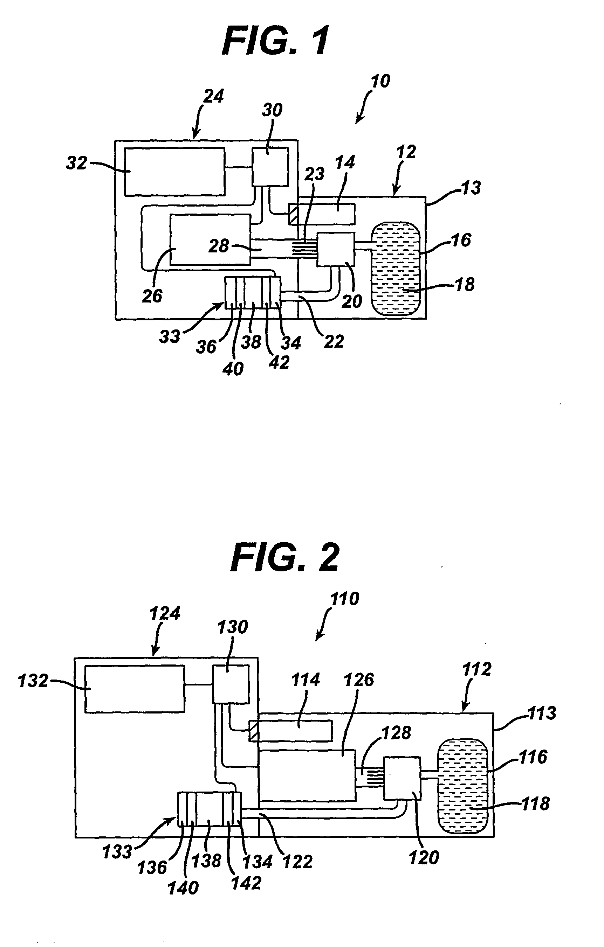

Referring to FIG. 1, a fuel cell system 10 includes a fuel cartridge 12 coupled to a fuel cell assembly 24. Fuel cartridge 12 includes a power source 14 positioned within a housing 13. A fuel bladder 16 and a flow control mechanism 20 are also positioned within housing 13. Fuel bladder 16 is in fluid communication with flow control mechanism 20. Fuel cell assembly 24 includes an actuator 26 that is operably connected to flow control mechanism 20. Fuel cell assembly 24 further includes a control unit 30, a secondary battery 32, and a fuel stack 33. Control unit 30 is in communication with secondary battery 32 and fuel stack 33, and can be connected to primary battery 14.

In some embodiments, upon coupling fuel cartridge 12 to fuel cell assembly 24, control unit 30 detects whether secondary battery 32 and/or fuel cell stack 33 have power levels sufficient to operate actuator 26 for a predetermined amount of time to start a power-generating process within fuel cell assembly 24. Upon determining that the power level of secondary battery 32 and/or fuel cell stack 33 is insufficient, control unit 30 electrically connects power source 14 to actuator 26 in order to provide energy to operate actuator 26. Actuator 26 then activates flow control mechanism 20 to cause fuel to flow from fuel bladder 16 to fuel cell stack 33. Fuel cell stack 33 converts the fuel into electrical energy, which can be used to operate an electronic device (e.g., a mobile phone, a portable computer, an audio/video device) connected to the fuel cell system 10. The electrical energy can also be used to recharge secondary battery 32. After secondary battery 32 and/or fuel cell stack 33 have reached a predetermined power level sufficient to independently maintain the power-generating process in fuel cell assembly 24, control unit 30 can electrically connect one or both of secondary battery 32 and fuel cell stack 33 to actuator 26, and can disconnect power source 14 from actuator 26. At that point, energy from secondary battery 32 and/or fuel cell stack 33 can be used to maintain the power-generating process. Thus, in some embodiments, energy from power source 14 need only be used for an initial period of time (e.g., until operation of fuel cell system 10 can be sustained without the use of energy from power source 14).

As described above, fuel cartridge 12 includes housing 13 in which power source 14, fuel bladder 16, and flow control mechanism 20 are located. Housing 13 can be formed of any of various materials, such as plastics (e.g., ABS, Polyethylene, Polycarbonate, Polyamide), metals (e.g.,aluminum, steel, plated steel), and/or composites (e.g., fiber reinforced polymers). In some embodiments, housing 13 includes fastening features that mate with corresponding fastener features of fuel cell assembly 24 to releasably couple fuel cartridge 12 to fuel cell assembly 24. Examples of fastening features include snapping elements, spring clips, latches, threaded fasteners, and bayonet-type quick release mechanisms. One of the walls of housing 13 defines an outlet 22 through which fuel can flow from fuel cartridge 12 to fuel cell assembly 24, and an aperture 23 through which a protruding, rotatable shaft 28 of actuator 26 can extend when fuel cartridge 12 is coupled to fuel cell assembly 24.

Power source 14 can be any of various primary and/or secondary electrochemical sources sized and shaped to fit within cartridge 12, and capable of providing a desired amount of energy. As used herein, primary electrochemical sources are meant to be discharged (e.g., to exhaustion) only once, and then discarded. Primary electrochemical sources are not intended to be recharged. Examples of primary electrochemical sources include primary batteries, such as button cell batteries, cylindrical batteries, and prismatic batteries. Primary batteries can include batteries of various different chemistries, such as alkaline batteries, lithium batteries, lithium-manganese dioxide batteries, zinc-silver oxide batteries, and zinc-air batteries. Other primary cells are described, for example, in David Linden, Handbook of Batteries (McGraw-Hill, 2d ed. 1995). Secondary electrochemical sources can be recharged many times (e.g., more than fifty times, more than a hundred times, or more). In some cases, secondary electrochemical sources include relatively robust separators, such as those having many layers and/or that are relatively thick. Secondary cells can also be designed to accommodate for changes, such as spelling, that can occur in the cells. Secondary power sources include secondary batteries, such as button cell batteries, cylindrical batteries, and prismatic batteries. Secondary batteries can be of various different chemistries, such as lithium-ion, lithium-polymer, nickel-metal hydride, nickelcadmium, nickel-zinc, silver-zinc, and lead-acid. Other secondary cells are described, for example, in Falk & Salkind, "Alkaline Storage Batteries," John Wiley & Sons, Inc. 1969; U.S. Pat. No. 345,124; and French Pat. No. 164,681.

Power source 14 can be positioned such that it makes electrical contact with electrical contacts of fuel cell assembly 24 upon coupling fuel cartridge 12 to fuel cell assembly 24. Consequently, electrical energy can be transferred from power source 14 to fuel cell assembly 24 (e.g., to control unit 30, which can be in communication with the electrical contacts of fuel cell assembly 24). In some embodiments, power source 14 is capable of producing a maximum output of about 30W or less (e.g., about 1W or less, about 500mW or less, about 100mW or less, about 50mW or less, about 10mW or less).

Fuel bladder 16 contains fluid fuel 18. Fuel 18 can be any material capable of providing energy to fuel cell system 10. Examples of suitable fuels include methanol, ethanol, mixtures of alcohol and water, hydrocarbons, solutions of hydrocarbons and water, solutions of metal borohydrides (e.g., sodium borohydride) and water, formic acid, ammonia, and hydrazine. Fuel 18 can be in the form of a liquid and/or a gas. Fuel bladder 16 can be formed of a polymeric material (e.g., nylon, urethane, polyethylene, silicon rubber, and/or polypropylene), a metal foil (e.g., aluminum, steel, steel alloys, and/or nickel), and/or a composite of metal and plastic. Other fuels and bladder materials are described in commonly assigned U.S. Patent Application No. 10/957,935, filed October 4,2004.

Fuel bladder 16 can be fluidly connected to flow control mechanism 20, such that fuel 18 can be pumped from fuel bladder 16 to fuel cell assembly 24 via flow control mechanism 20, as described below. In some embodiments, fuel bladder 16 is impermeable to liquid and/or vapor (e.g., CO₂, O₂, air). Fuel bladder 16 can collapse to reduce (e.g., minimize) resistance to fuel flow as fuel levels become depleted. For example, as fuel 18 exits fuel bladder 16, the bladder can substantially conform to the volume of the remaining fuel until the bladder is nearly fully collapsed (e.g., until about 95 percent or more of the fuel has been released from the bladder). In certain embodiments, a relatively constant pressure can be maintained within fuel bladder 16. The ability of fuel bladder 16 to maintain a relatively constant pressure can be a function of the thickness and/or flexibility of fuel bladder 16, as well as the shape of fuel bladder 18 and/or fuel cartridge 12. In certain embodiments, fuel bladder 16 contains substantially only fuel 18. For example, fuel bladder 16 can be substantially free of non-condensable gases. Consequently, flow control mechanism 20 can be provided with fuel 18 with fuel cartridge 12 arranged at substantially any attitude. For example, flow control mechanism 20 can remain primed at substantially all times when fuel cartridge 12 is coupled to fuel cell assembly 24.

Flow control mechanism 20 can be any device capable of transporting fuel 18 (as shown, from bladder 16 to stack 33). For example, flow control mechanism 20 can be any of various other types of positive displacement pumps, such as a peristaltic pump, a vane pump, a screw pump, a diaphragm pump, a gear pump, a bellows pump, and/or a piston pump. Alternatively or additionally, still other types of pumps can be used. As an example, flow control mechanism 20 can be a centrifugal pump. Check valves can be arranged to cooperate with the centrifugal pump to prevent backflow of the fuel when the pump is not being operated.

As described herein, flow control mechanism 20 is powered by actuator 26, which is positioned within fuel cell assembly 24. Actuator 26 can be mechanically coupled to flow control mechanism 20 upon coupling fuel cartridge 12 to fuel cell assembly 24. In this arrangement, flow control mechanism 20 can pump fuel into fuel cell assembly 24 (e.g., into fuel cell stack 33) upon being activated by actuator 26. In certain embodiments, flow control mechanism 20 remains in a closed or sealed position when not being activated by actuator 26, which can prevent fuel 18 from exiting bladder 16 when fuel cell system is not being used (e.g., when fuel cartridge 12 is not coupled to fuel cell assembly 24). Consequently, fuel 18 can be prevented from leaking out of fuel cartridge 12.

Fuel cell assembly 24, as described above, includes actuator 26, secondary battery 32, fuel cell stack 33, and control unit 30. As shown in FIG. 1, actuator 26 is a rotary motor that includes a rotatable, splined shaft 28 extending therefrom. Splined shaft 28 can be operably coupled to flow control mechanism 20 when fuel cartridge 12 is coupled to fuel cell assembly 24. For example, splined shaft 28 can mate with a grooved cylinder within flow control mechanism 20. The grooves of the cylinder can engage with the splines of shaft 28 to provide a rotatable connection. Due to the mechanical coupling between actuator 26 and flow control mechanism 20, fuel cartridge 12 can be manufactured relatively inexpensively. For example, the mechanical coupling can render it unnecessary in many cases to provide a relatively expensive electronic control unit and/or actuator in fuel cartridge 12. Actuator 26, as described below, can create a pumping action within flow control mechanism 20, which causes fuel 18 to flow from fuel cartridge 12 to fuel cell assembly 24 (e.g., into fuel cell stack 33).

Secondary battery 32 can be any of the various types of secondary batteries described above with respect to power source 14. Secondary battery 32 can be used to provide fuel cell system 10 with additional power during periods of peak load. For example, secondary battery 32 can provide fuel cell system 10 with additional power when the load placed on the fuel system 10 is greater than the power that fuel cell stack 33 is capable of producing independently. Secondary battery 32 can also be used to provide energy to motor 26 in order to initiate and/or maintain the power-generating process of fuel cell system 10.

Still referring to FIG. 1, an example of fuel cell stack 33 will now be described. Fuel cell stack 33 includes a fuel cell having an electrolyte 38, an anode 42 bonded on a first side of the electrolyte, and a cathode 40 bonded on a second side of the electrolyte. Electrolyte 38, anode 42, and cathode 40 are disposed between two gas diffusion layers (GDLs) 34 and 36. For illustrative purposes, fuel cell stack 33 is shown as having one fuel cell, but in other embodiments, the fuel cell stack includes a plurality of fuel cells, e.g., arranged in series and/or in parallel.

Electrolyte 38 can be capable of allowing ions to flow therethrough while providing a substantial resistance to the flow of electrons. In some embodiments, electrolyte 38 is a solid polymer (e.g., a solid polymer ion exchange membrane), such as a solid polymer proton exchange membrane (e.g., a solid polymer containing sulfonic acid groups). Such membranes are commercially available from E.I. DuPont de Nemours Company (Wilmington, DE) under the trademark NAFION. Alternatively, electrolyte 38 can also be prepared from the commercial product GORE-SELECT, available from W.L. Gore & Associates (Elkton, MD).

Anode 42 can be formed of any of various materials depending on, among other things, the type of fuel being used. In some embodiments, anode 42 is formed of a material, such as a catalyst, capable of interacting with methanol and water to form carbon dioxide, protons and electrons. Examples of such materials include, for example, platinum, platinum alloys (such as Pt-Ru, Pt-Mo, Pt-W, or Pt-Sn), platinum dispersed on carbon black. Anode 42 can further include an electrolyte, such as an ionomeric material, e.g., NAFION, that allows the anode to conduct protons. Alternatively, a suspension is applied to the surfaces of gas diffusion layers (described below) that face solid electrolyte 38, and the suspension is then dried. The method of preparing anode 42 may further include the use of pressure and temperature to achieve bonding.

Cathode 40 can similarly be formed of any of various materials depending on, among other things, the type of fuel being used. In certain embodiments, cathode 40 is formed of a material, such as a catalyst, capable of interacting with oxygen, electrons and protons to form water. Examples of such materials include, for example, platinum, platinum alloys (such as Pt-Co, Pt-Cr, or Pt-Fe) and noble metals dispersed on carbon black. Cathode 40 can further include an electrolyte, such as an ionomeric material, e.g., NAFION, that allows the cathode to conduct protons. Cathode 40 can be prepared using techniques similar to those described above with respect to anode 42.

Gas diffusion layers (GDLs) 34 and 36 can be formed of a material that is both gas and liquid permeable. Suitable GDLs are available from various companies such as Etek in Natick, MA, SGL in Valencia, CA, and Zoltek in St Louis, MO. GDLs 34 and 36 can be electrically conductive so that electrons can flow from anode 42 to an anode flow field plate and from a cathode flow field plate to cathode 40.

Examples of fuel cells and fuel cell systems are described in commonly owned and co-pending U.S. Pat. App. Nos. 10/779,502, filed February 13, 2004, and 10/957,935, filed October 4, 2004. Other embodiments of direct methanol fuel cells and fuel cell systems, including methods of use, are described, for example, in "Fuel Cell Systems Explained", J. Laraminie, A. Dicks, Wiley, New York, 2000; "Direct Methanol Fuel Cells: From a Twentieth Century Electrochemist's Dream to a Twenty-first Century Emerging Technology", C. Lamy, J. Leger, S. Srinivasan, Modem Aspects of Electrochemistry, No. 34, edited by J. Bockris et al., Kluwer Academic / Plenum Publishers, New York (2001) pp. 53-118; and "Development of a Miniature Fuel Cell for Portable Applications", S. R. Narayanan, T.I. Valdez and F. Clara, in Direct Methanol Fuel Cells, S. R. Narayanan, S. Gottesfeld and T. Zawodzinski, Editors, Electrochemical Society Proceedings, 2001-4 (2001) Pennington, NJ.

Control unit 30 can be used to initiate startup and maintain operation of fuel cell system 10. As shown in FIG 1, control unit 30 can be in communication (e.g., electrically connected) with power source 14, actuator 26, secondary battery 32, and fuel cell stack 33. Control unit 30, upon being powered by power source 14, secondary battery 32, and/or fuel cell stack 33, can control the operation of actuator 26, which can dictate the amount of energy produced by fuel cell system 10. As described in detail below, control unit 30 can alternatively or additionally perform other functions to control the operation of fuel cell system 10.

During use of fuel cell system 10, a user couples fuel cartridge 12 to fuel cell assembly 24. For example, the user can mate fuel cartridge 12 and fuel cell assembly 24, such that splined shaft 28 of actuator 26 is inserted within the grooved cylinder of flow control mechanism 20, and such that primary battery 14 engages electrical contact elements of fuel cell assembly 24. In some embodiments, as noted above, fuel cartridge 12 can be releasably fastened to fuel cell assembly 24 using one or more fastening elements.

Once fuel cartridge 12 is coupled to fuel cell assembly 24, control unit 30 detects the amount of power available in fuel cell assembly 24 (e.g., in secondary battery 24 and/or fuel cell stack 33). If control unit 30 detects that the available power level is less than a predetermined minimum power level necessary to initiate the power-generating process of fuel cell system 10 (e.g., less than, 30W, less than 3W, less than 1W, less than 500mW, less than 100mW, less than 5mW, less than 1mW), then control unit 30 activates actuator 26 using energy provided by power source 14.

Upon being activated, actuator 26 causes flow control mechanism 20 to pump fuel from fuel bladder 16 to fuel cell stack 33. For example, actuator 26 can cause splined shaft 28 to rotate the grooved cylinder of flow control mechanism 20, which creates a pumping action within flow control mechanism 20. The pumping action forces fuel 18 through outlet 22 and into fuel cell stack 33. Fuel 18, for example, can be pumped at a rate of about 0.1 microliter per minute to about 50 millileters per minute (e.g., about one microliter per minute to about ten microliters per minute) depending on the type of fuel cell being used and the power level of the fuel cell. Fuel 18 can be pumped in a continuous manner or in an as needed manner (e.g., by operating in a feedback loop with control unit 30).

Upon entering fuel cell stack 33, fuel 18 contacts anode 42, which, as described above, allows fuel cell stack 33 to produce electrical energy. The electrical energy flowing from fuel cell stack 33 flows to control unit 30, which can then transfer the energy to motor 26, secondary battery 32, and/or the electronic device connected to fuel cell system 10. For example, the electrical energy can be transferred to actuator 26 in order to maintain the power-generating process of fuel cell system 10. Alternatively or additionally, the electrical energy can be transferred to secondary battery 32 to recharge the battery and/or to power actuator 26 to maintain the power-generating process of fuel cell system 10 and/or the electronic device attached to fuel cell system 10. Similarly, the electrical energy can be transferred directly to the electronic device attached to fuel cell system 10 in order to power that device.

As described herein, fuel cell system 10 can initiate the power-generating process even when fuel cell assembly 24 is initially incapable of providing sufficient energy to start-up the system (e.g., after sitting dormant for long periods of time). For example, as described above, energy can be used from power source 14 to initiate the power-generating process. After initiating the power-generating process using energy from power source 14, control unit 30 can continue to monitor the power level within fuel cell assembly 24 (e.g., within secondary battery 32 and/or fuel cell stack 33). Control unit 30, for example, can switch the actuator's source of energy from power source 14 to secondary battery 32 and/or fuel cell stack 33 upon detecting that secondary battery 32 and/or fuel cell stack 33 have reached a predetermined minimum power level necessary to maintain operating of the fuel cell system. Thus, even when the energy of power source 14 is used to initially start the power-generating process, fuel cell system 10 can subsequently be adjusted to generate power without reliance on power source 14. Consequently, as noted above, power source 14 need only be capable of providing relatively small amounts of energy. In certain embodiments, for example, power source 14 is configured to provide sufficient energy to initiate the power-generating process of fuel cell system 10 about 12 times or fewer (e.g., about ten times or fewer, about five times or fewer, about two times or fewer, about one time).

The above embodiments describe methods of initiating the power-generating process of fuel cell system 10 when fuel cell assembly 24 has an insufficient power level to independently initiate the process. In such cases, as noted above, power source 14 can be used to initially activate actuator 26 in order to initiate the power-generating process. However, it should be appreciated that energy provided by secondary battery 24 and/or fuel stack 33 can be used to activate actuator 26 upon initially detecting that the available power level of fuel cell assembly 24 (e.g., the available power level of secondary battery and/or fuel cell stack 33) is greater than or equal to the predetermined minimum power level necessary to initiate the power-generation process of fuel cell system 10 (e.g., greater than 1mW, greater than 5mW, greater than 100mW, greater than 500mW, greater than 1W, greater than 3W, greater than 30W). In such cases, it is generally unnecessary to rely on the energy of power source 14 to initiate the power-generating process of fuel cell system 10.

While some of the embodiments discussed above involve pumping liquid fuel 18 from fuel cartridge 12 to fuel cell assembly 24, fuel 18 can also be pumped as vapor. For example, gravity separation techniques can be used separate the liquid fuel from its vapor, and the vapor can be pumped from fuel cartridge 12 to fuel cell assembly 24. A gravity separator can include a liquid-filled container arranged to control the level of the liquid. The liquid level can be maintained, for example, with the use of an overflow tube. By controlling the liquid level within the container, a liquid to gas interface can be maintained within the container. Gas can be removed from an upper portion of the container and delivered to fuel assembly 24. In certain embodiments, one or more baffles are used in order to allow some variation in the orientation of the tank while maintaining gas separation.

Alternatively or additionally, fuel cartridge 12 can include a diffusion barrier that allows vapor to be transported therethrough but substantially prevents the transport of liquid therethrough. The diffusion barrier, for example, can be located in the flow path of fuel 18 between fuel bladder 16 and flow control mechanism 20. The diffusion barrier can be formed of any of various materials that allow the transport of gaseous or vapor fuel therethrough and prevent the transport of liquid fuel therethrough. Appropriate materials can be chosen based on the type of fuel that is used. In certain embodiments, fuel cartridge 12 includes a microporous and/or non-wettable barrier. Similar to the diffusion barrier, the microporous and/or non-wettable barrier does not allow liquid to pass through it, but does allow vapor to pass through it. Any of various materials that are non-wettable and/or have an average pore size small enough to prevent bulk flow of liquid (e.g., high bubble pressure) can be used. The type of material(s) with which to form the microporous and/or non-wettable barrier are dependent upon the type of fuel used in the system.

While actuator 26 was described above as a rotary motor, in other embodiments, various other types of actuators can be used. For example, acutator 26 can be a linear actuator (e.g., a rotary motor coupled to a rack and pinion), a direct linear magnetic motor (e.g., a solenoid), and/or a piezoelectric actuator. Similarly, any of various types of connections can be used between actuator 26 and flow control mechanism 20. For example, actuator 26 and flow control mechanism 20 can be pneumatically connected, hydraulically connected, magnetically connected, electrostatically connected, thermally connected, and/or mechanically connected. The type of actuator and type of connection can vary depending on the desired application and the type of flow control mechanism that is used.

While the embodiments described above involve initially powering motor 26 with primary battery 14 when fuel cell assembly 24 includes limited levels of energy, other arrangements are possible. In some embodiments, for example, primary battery 14 is configured to initially charge secondary battery 32 rather than to power actuator 26. Upon reaching a predicted energy level, for example, secondary battery 32 can provide energy to actuator 26 and/or controller 30. The remainder of the power-generating process can be carried out in a manner similar to that described above.

In some embodiments, fuel cell cartridge 12 can be configured to detect and indicate to a user whether fuel cartridge 12 has been sufficiently coupled to fuel cell assembly 24. For example, upon making electrical contact with contacts of fuel cell assembly 24, power source 14 can provide energy to illuminate an indicator light on fuel cartridge 12, which indicates to the user that fuel cartridge 12 has been sufficiently coupled to fuel cell assembly 24. Alternatively or additionally, other types of indicators, such as audio indicators may be used.

In some embodiments, fuel cartridge 12 is disposable. For example, fuel cartridge 12 can be removed from fuel cell assembly 24 and disposed of once the level of fuel 18 and/or power level of power source 14 become substantially depleted. At that point, a new cartridge can be coupled to fuel cell assembly 24 in order to generate power.

In certain embodiments, fuel cartridge 12 is refillable. For example, upon substantial depletion of the level of fuel 18 within fuel bladder 16, fuel cartridge 12 can be uncoupled from fuel cell assembly 24 and refilled with fuel for further use. Similarly, power source 14 can be replaced with a fresh battery upon depletion of its power level.

In some embodiments, fuel cartridge 12 includes a fuel gauge. The fuel gauge, for example, can be connected to actuator 26, shaft 28, and/or pump 20, and can determine the fuel level within fuel bladder 16 as a function of the number of actuations of the actuator.

While the actuator described in many of the embodiments above is positioned in the fuel cell assembly, in some embodiments, the actuator may be included within the fuel cartridge. Referring to FIG. 2, for example, a fuel cartridge 112 includes an actuator 126 and a flow control mechanism 120. Actuator 126 is electrically connected to flow control mechanism 120 and to a primary battery 114 stored within fuel cartridge 112. Primary battery 114 can initially provide power to actuator 126 (via control unit 130) in order to initiate the fuel delivery process (e.g., to pump fuel 118 from fuel bladder 116 to fuel cell stack 133). Upon generating enough power to become self-sufficient, fuel cell assembly 124 can begin to power actuator 126 without the assistance of power source 114. For example, similar to some of the embodiments discussed above, control unit 130 can electrically connect actuator 126 to fuel cell stack 33 and/or secondary battery 32 upon determining that fuel cell assembly 124 has a power level sufficient to maintain the power-generating process.

In some embodiments fuel cartridge 112 is disposable. In such embodiments, actuator 126 can be manufactured relatively inexpensively because it need only be constructed to last as long as the disposable fuel cartridge (e.g., as long as fuel 118). Actuator 126, for example, can be integrated into the housing such that housing 126 and cartridge 112 share a common housing (e.g., a common portion of the housing). Actuator 126 can include any of various low-cost and/or limited-life magnetic components. In some embodiments, actuator 126 includes a piezoelectric disk.

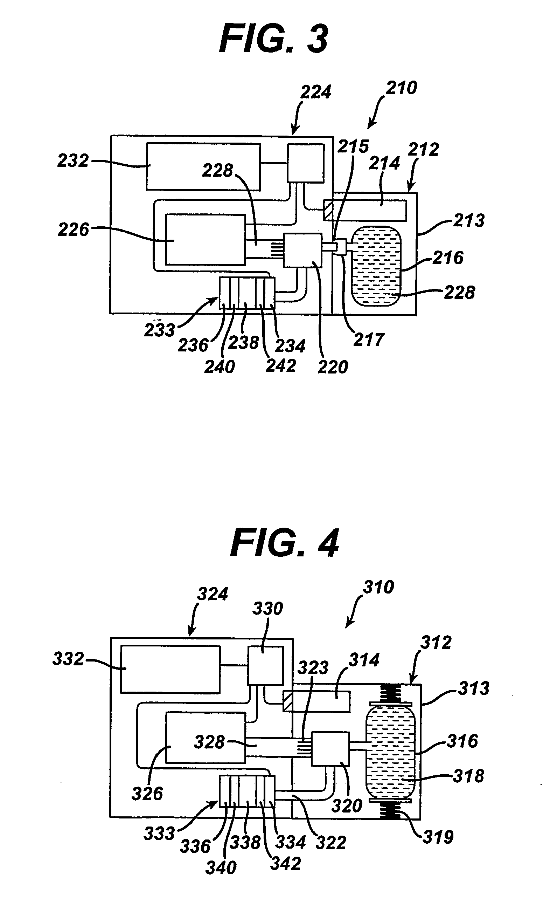

While many of the embodiments above describe the flow control mechanism as being positioned within the fuel cartridge, in some embodiments, the flow control mechanism may alternatively be included in the fuel cell assembly. Referring to FIG. 3, for example, a fuel cell system 210 includes a fuel cartridge 212 that is coupled to a fuel cell assembly 224. Fuel cartridge 212 includes tubing 215 leading from fuel bladder 216 to an aperture defined in housing 213. A valve 217 (e.g., a one-way valve) can be positioned within tubing 215 to prevent fuel 218 from leaking out of fuel cartridge 212 when not coupled to fuel cell assembly 224. Valve 217 can be any of various types of mechanical and/or elastomeric valves. Examples of mechanical valves include flapper valves, poppett valves, disk valves, and gate valves. Examples of elastomeric valves include duckbill valves, umbrella valves, and slit valves. Upon coupling fuel cartridge 212, a projection extending from flow control mechanism 220 can extend into tubing 215 to open the valve 217. Consequently, fuel 218 can flow from fuel bladder 216 to flow control mechanism 220 within fuel cell assembly 224. Flow control mechanism 220 can pump fuel 218 to fuel cell stack 233 when activated, and a power generating process similar to those described above can occur.

While many of the embodiments above describe the flow control mechanism as a pump, in some embodiments, the flow control mechanism may be a valve. Referring to FIG. 4, for example, a fuel cell system 310 includes a fuel cartridge 312 coupled to a fuel cell assembly 324. Fuel cartridge 312 includes a valve 320 and a fuel bladder 316. Valve 320 can be any of various types of valves, such as a diaphragm valve, a needle valve, a rotary valve, a plug valve, a bellows valve, a gate valve, and/or a wedge valve. Valve 320 is in fluid communication with fuel bladder 316 and an outlet 322 defined by a wall of fuel cartridge 312. Valve 320 is mechanically coupled to an actuator 326 positioned within fuel cell assembly 324. Valve 320 can be configured such that it is normally in a closed position. For example, valve 320 can remain in a closed position until actuator 326 is activated to open valve 320. Consequently, fuel can be prevented from exiting fuel cartridge 312 when fuel cell system 310 is not in use (e.g., when fuel cartridge 312 is not coupled to fuel cell assembly 324).

Fuel cartridge includes a fuel bladder 316 that contains fuel 318. A spring loaded device 319 is positioned near an end region of fuel bladder 316. Spring-loaded device 319 is configured to apply pressure to fuel bladder 316, thereby pressurizing fuel 318 contained therein. Alternatively or additionally, other means can be used to pressurize fuel 318. For example, in some embodiments, fuel cartridge 312 contains a high vapor pressure liquid between housing 313 and fuel bladder 316. Examples of high vapor pressure liquids include chlorofluorocarbons (e.g., Freon), HCFCs, butane, propane, dicholorodifluromethane, and methylchloride. As another example, a pressure source can be configured to introduce pressurized fluid (e.g., air and/or fuel cell exhaust gases) into an anterior volume of housing 313 (e.g., the region between the inner surface of housing 313 and the outer surface of fuel bladder 316) in order to pressurize fuel bladder 316. As yet another example, fuel 318 can be any of various self-pressurized fuels. Examples of self-pressurized fuels include butane, propane, and ethane. In certain embodiments, fuel 318 that is pressurized to a pressure of about 1.5 atmospheres to about 10 atmospheres.

Upon activating valve 320 with actuator 326, pressurized fuel 318 is permitted to flow from fuel bladder 316 to fuel cell stack 333. In certain embodiments, a control unit 330 of fuel cell assembly 324 is connected to pressure sensor positioned within the fuel bladder. Control unit 330 can be adapted to adjust valve 320 via actuator 326 as the pressure within fuel bladder 318 changes. As the fuel level within fuel bladder 316 decreases, for example, the pressure within fuel bladder 316 generally decreases. Control unit 330 can open valve 320 further as the pressure decreases in order to maintain the flow of fuel 318 at a substantially constant rate, and thus to maintain a substantially constant level of power generation. After fuel 318 is delivered to fuel cell stack 333, the power-generating process can be carried out as described above.

While the embodiments above show fuel cartridges including a power source, the fuel cartridges need not include a power source. In some embodiments, for example, where supplemental power is required to initiate the power-generating process of the fuel cell, the fuel cell can be temporarily connected (e.g., electrically connected) to an external power source.

## Claims

1. A fuel cartridge (12) comprising:
- a housing (13) having an outlet (22);
- a fuel container in the housing;
- a flow control mechanism (20) in fluid communication with the fuel container and the outlet, the flow control mechanism being operable to control fuel flow through the outlet; and
- a power source (14) in the housing.

2. The fuel cartridge of claim 1, wherein the fuel cartridge is coupled to a fuel cell assembly (24).

3. The fuel cartridge of claim 1, wherein the flow control mechanism (20) is coupled to an actuator (26).

4. The fuel cartridge of claim 3, wherein the flow control mechanism is mechanically coupled to the actuator.

5. The fuel cartridge of claim 4, wherein the mechanical coupling comprises one or more members selected from the group consisting of a splined shaft, a keyed shaft, a jaw clutch, a friction clutch, a gear, and a rod.

6. The fuel cartridge of claim 4, wherein the actuator (26) is positioned within a fuel cell assembly, and the fuel cartridge is coupled to the fuel cell assembly.

7. The fuel cartridge of claim 4, wherein the actuator (26) is positioned within the fuel cartridge.

8. The fuel cartridge of claim 7, wherein the actuator (26) comprises piezoelectric element.

9. The fuel cartridge of claim 1, wherein the flow control mechanism (20) comprises a pump.

10. The fuel cartridge of claim 9, wherein the pump comprises one or more members selected from the group consisting of a peristaltic pump, a vane pump, a screw pump, a diaphragm pump, a gear pump, a bellow pump, and a piston pump.

11. The fuel cartridge of claim 1, wherein the flow control mechanism comprises a valve.

12. The fuel cartridge of claim 11, wherein the valve comprises one or more members selected from the group consisting of a diaphragm valve, a needle valve, a rotary valve, a plug valve, a flapper valve, a poppett valve, a disk valve, a gate valve, a duckbill valve, an umbrella valve, and a slit valve.

13. The fuel cartridge of claim 1, wherein the power source comprises a primary battery.

14. The fuel cartridge of claim 13, wherein the primary battery produces at most about 3 W.

15. The fuel cartridge of claim 13, wherein the primary battery produces at least about 50mW.

16. The fuel cartridge of claim 1, wherein the fuel comprises one or more members selected from the group consisting of methanol, ethanol, hydrocarbons, formic acid, ammonia, and hydrazine.

17. The fuel cartridge of claim 1, wherein the fuel is at a pressure of about 0.1 atmosphere to about 10 atmospheres.

18. The fuel cartridge of claim 1, wherein the fuel container comprises a fuel bladder.

19. A fuel cell system (10) comprising:
- a fuel cell assembly (24) comprising a fuel cell (33), and
- an actuator (26) adapted to receive energy generated by the fuel cell; and
- a fuel cartridge (12) according to claim 1.

20. The fuel cell system of claim 19, wherein the fuel cell assembly further comprises a secondary battery (32).

21. The fuel cell system of claim 20, further comprising a control device (30) connected to the secondary battery (32) and the power source (14), the control device being adapted to determine whether a power level of the secondary battery is sufficient to operate the actuator (26).

22. The fuel cell system of claim 21, wherein the control device (30) is adapted to electrically connect the power source (14) to the actuator (26) upon determining that the power level is insufficient to operate the actuator.

23. The fuel cell system of claim 19, wherein the flow control mechanism (20) is coupled to the actuator (26).

24. The fuel cell system of claim 19, wherein the flow control mechanism (20) comprises a pump.

25. The fuel cell system of claim 19, wherein the flow control mechanism (20) comprises a valve.

26. The fuel cell system of claim 19, wherein the power source (14) comprises a primary battery.

27. A fuel cell system (10) comprising:
- a fuel cell assembly (24) comprising a fuel cell (33); and
- a fuel cartridge (12) according to claim 1.

28. The fuel cell system of claim 27, further comprising an actuator (26) in communication with the power source (14).

29. The fuel cell system of claim 28, wherein the actuator (26) is positioned in the fuel cell assembly (24).

30. The fuel cell system of claim 29, wherein the actuator (26) is coupled to the flow control mechanism (20).

31. The fuel cell system of claim 28, wherein the actuator (26) is positioned within the fuel cartridge (12).

32. The fuel cell system of claim 27, wherein the fuel cell assembly further comprises a secondary battery (32).

33. The fuel cell system of claim 27, wherein the power source comprises a primary battery.

34. The fuel cell system of claim 27, wherein the fuel container comprises a fuel bladder (16).

35. The fuel cell system of claim 34, wherein the fuel cartridge comprises a pressure source configured to apply pressure to the fuel bladder.

36. The fuel cell system of claim 35, wherein the pressure source comprises a spring-loaded mechanism.

37. The fuel cell system of claim 35, wherein the pressure source comprises a pressurized fluid.

38. A method of initiating startup and maintaining operation of a fuel cell system (10), the method comprising:
- connecting a fuel cartridge (12) to a fuel cell assembly (24) so as to form a fuel cell system (10);
- detecting a level of available energy in the fuel cell assembly (24); and
- upon detecting that the level of available energy is less than a first predetermined energy level, providing the fuel cell assembly (24) with energy from a power source (14) in the fuel cartridge (12).

39. The method of claim 38 , wherein the first predetermined energy level is a minimum energy level required to initiate operation of the fuel cell assembly (24).

40. The method of claim 38 , wherein the first predetermined energy level is a minimum energy level required to operate an actuator (26) of the fuel cell assembly (24) for a predetermined amount of time.

41. The method of claim 38, further comprising ceasing the provision of energy from the power source (14) to the fuel cell assembly (24) upon detecting that the level of available energy is greater than a second predetermined energy level.

42. The method of claim 41, wherein the second predetermined energy level is a minimum energy level required to maintain operation of the fuel cell assembly (24).

43. The method of claim 38, further comprising transferring energy from the fuel cell assembly (24) to an electronic device.

## Patentansprüche

1. Brennstoffpatrone (12), umfassend:
- ein Gehäuse (13) mit einem Auslass (22);
- einen Brennstoffbehälter im Gehäuse;
- einen Flusssteuerungsmechanismus (20) in Fluidkommunikation mit dem Brennstoffbehälter und dem Auslass, wobei der Flusssteuerungsmechanismus wirksam ist, den Brennstofffluss durch den Auslass zu steuern; und
- eine Energiequelle (14) im Gehäuse.

2. Brennstoffpatrone nach Anspruch 1, wobei die Brennstoffpatrone an eine Brennstoffzellenanordnung (24) gekoppelt ist.

3. Brennstoffpatrone nach Anspruch 1, wobei der Flusssteuerungsmechanismus (20) an eine Stelleinrichtung (26) gekoppelt ist.

4. Brennstoffpatrone nach Anspruch 3, wobei der Flusssteuerungsmechanismus mechanisch an die Stelleinrichtung gekoppelt ist.

5. Brennstoffpatrone nach Anspruch 4, wobei das mechanische Koppeln ein oder mehrere Elemente umfasst, ausgewählt aus der Gruppe bestehend aus einer Zahnwelle, einer Keilwelle, einer Klauenkupplung, einer Reibungskupplung, einem Getriebe und einem Stab.

6. Brennstoffpatrone nach Anspruch 4, wobei die Stelleinrichtung (26) innerhalb einer Brennstoffzellenanordnung positioniert ist und die Brennstoffpatrone an die Brennstoffzellenanordnung gekoppelt ist.

7. Brennstoffpatrone nach Anspruch 4, wobei die Stelleinrichtung (26) innerhalb der Brennstoffpatrone positioniert ist.

8. Brennstoffpatrone nach Anspruch 7, wobei die Stelleinrichtung (26) ein piezoelektrisches Element umfasst.

9. Brennstoffpatrone nach Anspruch 1, wobei der Flusssteuerungsmechanismus (20) eine Pumpe umfasst.

10. Brennstoffpatrone nach Anspruch 9, wobei die Pumpe ein oder mehrere Elemente umfasst, ausgewählt aus der Gruppe bestehend aus einer Schlauchquetschpumpe, einer Flügelzellenpumpe, einer Schraubenpumpe, einer Membranpumpe, einer Zahnradpumpe, einer Balgpumpe und einer Kolbenpumpe.

11. Brennstoffpatrone nach Anspruch 1, wobei der Flusssteuerungsmechanismus ein Ventil umfasst.

12. Brennstoffpatrone nach Anspruch 11, wobei das Ventil ein oder mehrere Elemente umfasst, ausgewählt aus der Gruppe bestehend aus einem Membranventil, einem Nadelventil, einem Drehventil, einem Kegelventil, einem Klappenventil, einem Sitzventil, einem Tellerventil, einem Absperrventil, einem Lippenventil, einem Schirmventil und einem Schlitzventil.

13. Brennstoffpatrone nach Anspruch 1, wobei die Energiequelle eine Primärbatterie umfasst.

14. Brennstoffpatrone nach Anspruch 13, wobei die Primärbatterie höchstens 3 W hervorbringt.

15. Brennstoffpatrone nach Anspruch 13, wobei die Primärbatterie zumindest etwa 50 mW hervorbringt.

16. Brennstoffpatrone nach Anspruch 1, wobei der Brennstoff ein oder mehrere Elemente umfasst, ausgewählt aus der Gruppe bestehend aus Methanol, Ethanol, Kohlenwasserstoffen, Ameisensäure, Ammoniak und Hydrazin.

17. Brennstoffpatrone nach Anspruch 1, wobei der Brennstoff bei einem Druck von etwa 0,1 Atmosphären bis etwa 10 Atmosphären ist.

18. Brennstoffpatrone nach Anspruch 1, wobei der Brennstoffbehälter eine Brennstoffblase umfasst.

19. Brennstoffzellensystem (10), umfassend:
- eine Brennstoffzellenanordnung (24), umfassend eine Brennstoffzelle (33), und
- eine Stelleinrichtung (26), angepasst zum Aufnehmen von durch die Brennstoffzelle erzeugter Energie; und
- eine Brennstoffpatrone (12) gemäß Anspruch 1.

20. Brennstoffzellensystem nach Anspruch 19, wobei die Brennstoffzellenanordnung ferner eine Sekundärbatterie (32) umfasst.

21. Brennstoffzellensystem nach Anspruch 20, ferner umfassend eine Steuervorrichtung (30), verbunden mit der Sekundärbatterie (32) und der Energiequelle (14), wobei die Steuervorrichtung angepasst ist, zu bestimmen, ob ein Energieniveau der Sekundärbatterie ausreichend ist, um die Stelleinrichtung (26) zu bedienen.

22. Brennstoffzellensystem nach Anspruch 21, wobei die Steuervorrichtung (30) angepasst ist, die Energiequelle (14) mit der Stelleinrichtung (26) elektrisch zu verbinden, nach einem Bestimmen, dass das Energieniveau nicht ausreichend ist, um die Stelleinrichtung zu bedienen.

23. Brennstoffzellensystem nach Anspruch 19, wobei der Flusssteuerungsmechanismus (20) an die Stelleinrichtung (26) gekoppelt ist.

24. Brennstoffzellensystem nach Anspruch 19, wobei der Flusssteuerungsmechanismus (20) eine Pumpe umfasst.

25. Brennstoffzellensystem nach Anspruch 19, wobei der Flusssteuerungsmechanismus (20) ein Ventil umfasst.

26. Brennstoffzellensystem nach Anspruch 19, wobei die Energiequelle (14) eine Primärbatterie umfasst.

27. Brennstoffzellensystem (10), umfassend:
- eine Brennstoffzellenanordnung (24), umfassend eine Brennstoffzelle (33); und
- eine Brennstoffpatrone (12) gemäß Anspruch 1.

28. Brennstoffzellensystem nach Anspruch 27, ferner umfassend eine Stelleinrichtung (26) in Kommunikation mit der Energiequelle (14).

29. Brennstoffzellensystem nach Anspruch 28, wobei die Stelleinrichtung (26) in der Brennstoffzellenanordnung (24) positioniert ist.

30. Brennstoffzellensystem nach Anspruch 29, wobei die Stelleinrichtung (26) an den Flusssteuerungsmechanismus (20) gekoppelt ist.

31. Brennstoffzellensystem nach Anspruch 28, wobei die Stelleinrichtung (26) innerhalb der Brennstoffpatrone (12) positioniert ist.

32. Brennstoffzellensystem nach Anspruch 27, wobei die Brennstoffzellenanordnung ferner eine Sekundärbatterie (32) umfasst.

33. Brennstoffzellensystem nach Anspruch 27, wobei die Energiequelle eine Primärbatterie umfasst.

34. Brennstoffzellensystem nach Anspruch 27, wobei der Brennstoffbehälter eine Brennstoffblase (16) umfasst.

35. Brennstoffzellensystem nach Anspruch 34, wobei die Brennstoffpatrone eine Druckquelle umfasst, konfiguriert, um Druck auf die Brennstoffblase auszuüben.

36. Brennstoffzellensystem nach Anspruch 35, wobei die Druckquelle einen federbelasteten Mechanismus umfasst.

37. Brennstoffzellensystem nach Anspruch 35, wobei die Druckquelle ein druckbeaufschlagtes Fluid umfasst.

38. Verfahren zum Initiieren einer Inbetriebnahme und Aufrechterhaltung eines Betriebs eines Brennstoffzellensystems (10), wobei das Verfahren Folgendes umfasst:
- Verbinden einer Brennstoffpatrone (12) mit einer Brennstoffzellenanordnung (24), um ein Brennstoffzellensystem (10) zu bilden;
- Detektieren eines Niveaus von verfügbarer Energie in der Brennstoffzellenanordnung (24); und
- nach einem Detektieren, dass das Niveau von verfügbarer Energie niedriger als ein erstes vorbestimmtes Energieniveau ist, Versorgen der Brennstoffzellenanordnung (24) mit Energie von einer Energiequelle (14) in der Brennstoffpatrone (12).

39. Verfahren nach Anspruch 38, wobei das erste vorbestimmte Energieniveau ein minimales Energieniveau ist, das benötigt wird, um einen Betrieb der Brennstoffzellenanordnung (24) zu initiieren.

40. Verfahren nach Anspruch 38, wobei das erste vorbestimmte Energieniveau ein minimales Energieniveau ist, das benötigt wird, um eine Stelleinrichtung (26) der Brennstoffzellenanordnung (24) für eine vorbestimmte Zeitdauer zu betreiben.

41. Verfahren nach Anspruch 38, ferner umfassend das Beenden der Bereitstellung von Energie von der Energiequelle (14) an die Brennstoffzellenanordnung (24) nach dem Detektieren, dass das Niveau von verfügbarer Energie größer ist als ein zweites vorbestimmtes Energieniveau.

42. Verfahren nach Anspruch 41, wobei das zweite vorbestimmte Energieniveau ein minimales Energieniveau ist, das benötigt wird, um einen Betrieb der Brennstoffzellenanordnung (24) aufrecht zu erhalten.

43. Verfahren nach Anspruch 38, ferner umfassend das Übertragen von Energie von der Brennstoffzellenanordnung (24) an eine elektronische Vorrichtung.

## Revendications

1. Cartouche de combustible (12) comprenant :
- un boîtier (13) pourvu d'un orifice de sortie (22);
- un réservoir de combustible à l'intérieur du boîtier;
- un mécanisme de régulation de flux (20) en communication de fluide avec le réservoir de combustible et l'orifice de sortie, le mécanisme de régulation de flux étant utilisé afin de réguler un flux de combustible à travers l'orifice de sortie; et
- une source de puissance (14) à l'intérieur du boîtier.

2. Cartouche de combustible selon la revendication 1, dans laquelle la cartouche de combustible est couplée à un assemblage de pile à combustible (24).

3. Cartouche de combustible selon la revendication 1, dans laquelle le mécanisme de régulation de flux (20) est couplé à un actionneur (26).

4. Cartouche de combustible selon la revendication 3, dans laquelle le mécanisme de régulation de flux est couplé à l'actionneur mécaniquement.

5. Cartouche de combustible selon la revendication 4, dans laquelle le couplage mécanique comprend un ou plusieurs éléments sélectionnés dans le groupe comprenant un arbre cannelé, un arbre claveté, un embrayage à mâchoires, un embrayage à friction, un engrenage, et une tige.

6. Cartouche de combustible selon la revendication 4, dans laquelle l'actionneur (26) est placé à l'intérieur d'un assemblage de pile à combustible, et la cartouche de combustible est couplée à l'assemblage de pile à combustible.

7. Cartouche de combustible selon la revendication 4, dans laquelle l'actionneur (26) est placé à l'intérieur de la cartouche de combustible.

8. Cartouche de combustible selon la revendication 7, dans laquelle l'actionneur (26) comprend un élément piézoélectrique.

9. Cartouche de combustible selon la revendication 1, dans laquelle le mécanisme de régulation de flux (20) comprend une pompe.

10. Cartouche de combustible selon la revendication 9, dans laquelle la pompe comprend un ou plusieurs éléments sélectionnés dans le groupe comprenant une pompe péristaltique, une pompe à palettes, une pompe à vis, une pompe à diaphragme, une pompe à engrenages, une pompe à soufflet, et une pompe à piston.

11. Cartouche de combustible selon la revendication 1, dans laquelle le mécanisme de régulation de flux comprend une vanne (soupape, ou clapet).

12. Cartouche de combustible selon la revendication 11, dans laquelle la vanne comprend un ou plusieurs éléments sélectionnés dans le groupe comprenant une soupape à diaphragme, une vanne à pointeau, une vanne rotative, un clapet à tournant, un clapet à battant, un distributeur à clapet, une soupape à disques, un robinet vanne, une vanne à bec de canard, une soupape parapluie, et une soupape à fente.

13. Cartouche de combustible selon la revendication 1, dans laquelle la source de puissance comprend une batterie principale.

14. Cartouche de combustible selon la revendication 13, dans laquelle la batterie principale produit 3 W environ maximum.

15. Cartouche de combustible selon la revendication 13, dans laquelle la batterie principale produit 50 mW environ minimum.

16. Cartouche de combustible selon la revendication 1, dans laquelle le gaz combustible comprend un ou plusieurs éléments sélectionnés dans le groupe comprenant du méthanol, de l'éthanol, des hydrocarbures, de l'acide formique, de l'ammoniac, et de l'hydrazine.

17. Cartouche de combustible selon la revendication 1, dans laquelle le combustible est comprimé à une pression de 0,1 atmosphère environ, jusqu'à une pression de 10 atmosphères environ.

18. Cartouche de combustible selon la revendication 1, dans laquelle le réservoir de combustible comprend une vessie de réservoir de combustible.

19. Système de pile à combustible (10) comprenant :
- un assemblage de pile à combustible (24) comprenant une pile à combustible (33), et
- un actionneur (26) adapté pour recevoir une énergie produite par la pile à combustible ; et
- une cartouche de combustible (12) selon la revendication 1.

20. Système de pile à combustible selon la revendication 19, dans lequel l'assemblage de pile à combustible comprend par ailleurs une batterie auxiliaire (32).

21. Système de pile à combustible selon la revendication 20, comprenant par ailleurs un dispositif de contrôle (30) connecté à la batterie auxiliaire (32) et à la source de puissance (14), le dispositif de contrôle étant adapté pour déterminer si un niveau de puissance de la batterie auxiliaire est suffisant pour faire fonctionner l'actionneur (26).

22. Système de pile à combustible selon la revendication 21, dans lequel le dispositif de contrôle (30) est adapté pour connecter électriquement la source de puissance (14) à l'actionneur (26) lorsqu'il est déterminé que le niveau de puissance n'est pas suffisant pour faire fonctionner l'actionneur.

23. Système de pile à combustible selon la revendication 19, dans lequel le mécanisme de régulation de flux (20) est couplé à l'actionneur (26).

24. Système de pile à combustible selon la revendication 19, dans lequel le mécanisme de régulation de flux (20) comprend une pompe.

25. Système de pile à combustible selon la revendication 19, dans lequel le mécanisme de régulation de flux (20) comprend une vanne (soupape, ou clapet).

26. Système de pile à combustible selon la revendication 19, dans lequel la source de puissance (14) comprend une batterie principale.

27. Système de pile à combustible (10) comprenant :
- un assemblage de pile à combustible (24) comprenant une pile à combustible (33) ; et
- une cartouche de combustible (12) selon la revendication 1.

28. Système de pile à combustible selon la revendication 27, comprenant par ailleurs un actionneur (26) en communication avec la source de puissance (14).

29. Système de pile à combustible selon la revendication 28, dans lequel l'actionneur (26) est placé à l'intérieur de l'assemblage de pile à combustible (24).

30. Système de pile à combustible selon la revendication 29, dans lequel l'actionneur (26) est couplé au mécanisme de régulation de flux (20).

31. Système de pile à combustible selon la revendication 28, dans lequel l'actionneur (26) est placé à l'intérieur de la cartouche de combustible (12).

32. Système de pile à combustible selon la revendication 27, dans lequel l'assemblage de pile à combustible comprend par ailleurs une batterie auxiliaire (32).

33. Système de pile à combustible selon la revendication 27, dans lequel la source de puissance comprend une batterie principale.

34. Système de pile à combustible selon la revendication 27, dans lequel le réservoir de combustible comprend une vessie de réservoir de combustible (16).

35. Système de pile à combustible selon la revendication 34, dans lequel la cartouche de combustible comprend une source de pression configurée de façon à appliquer une pression sur la vessie de réservoir de combustible.

36. Système de pile à combustible selon la revendication 35, dans lequel la source de pression comprend un mécanisme chargé par ressort.

37. Système de pile à combustible selon la revendication 35, dans lequel la source de pression comprend un fluide sous pression.

38. Procédé de mise en route et d'entretien du fonctionnement d'un système de pile à combustible (10), le procédé comprenant :
- le raccordement d'une cartouche de combustible (12) à un assemblage de pile à combustible (24) de façon à former un système de pile à combustible (10);
- la détection d'un niveau d'énergie disponible dans l'assemblage de pile à combustible (24) ; et
- lorsqu'il est détecté que le niveau d'énergie disponible est inférieur à un premier niveau d'énergie prédéterminé; procurer à l'assemblage de pile à combustible (24) de l'énergie provenant d'une source de puissance (14) dans la cartouche de combustible (12).

39. Procédé selon la revendication 38, dans lequel le premier niveau d'énergie prédéterminé est un niveau d'énergie minimum requis pour initier le fonctionnement de l'assemblage de pile à combustible (24).

40. Procédé selon la revendication 38, dans lequel le premier niveau d'énergie prédéterminé est un niveau d'énergie minimum requis pour commander le fonctionnement d'un actionneur (26) de l'assemblage de pile à combustible (24) durant une période de temps prédéterminée.

41. Procédé selon la revendication 38, comprenant par ailleurs l'arrêt de la fourniture d'énergie, de la source de puissance (14) vers l'assemblage de pile à combustible (24), lorsqu'il est détecté que le niveau d'énergie disponible est supérieur à un second niveau d'énergie prédéterminé.

42. Procédé selon la revendication 41, dans lequel le second niveau d'énergie prédéterminé est un niveau d'énergie minimum requis pour entretenir le fonctionnement de l'assemblage de pile à combustible (24).

43. Procédé selon la revendication 38, comprenant par ailleurs un transfert d'énergie, de l'assemblage de pile à combustible (24) vers un dispositif électronique.
